# EUROPEAN PATENT APPLICATION

(11) **EP 4 707 633 A1**
(43) Date of publication of application: **11.03.2026**
(21) Application number: 24198678.5
(22) Date of filing: 05.09.2024
(51) Int. Cl.: F16D 65/12

(54) **BRAKE ASSEMBLY**

(71) Applicant: Deere & Company, Moline, IL 61265 (US)
(72) Inventor: SHINDE, VIKAS, 68163 Mannheim (DE); GAERTNER, JUERGEN, 68163 Mannheim (DE); HALLALE, SANJEEV M, 68163 Mannheim (DE)
(74) Representative: Dehnhardt, Florian Christopher

(57) **Abstract**

A brake assembly (10) comprises a brake plate (2) mountable on a shaft with the support of a first hub plate (6) and a second hub plate (8), wherein the brake plate (2) is placed between the first hub plate (6) and the second hub plate (8), wherein the brake plate (2) is configured with a plurality of holes (12), wherein at least the first hub plate (6) has plurality of extrusions (14) having a spread (16) at the end of each of the extrusions (14) and at least the second hub plate (8) has a plurality of holes (18), wherein the first hub plate (6), the second hub plate (8) and the brake plate (2) are connected by a joint (20), wherein the joint (20) is defined by extending at least one of the extrusions (14) of the first hub plate (6) through at least one of the holes (12) of the brake plate (2), and at least one of the holes (18) of the second hub plate (8) receives the spread (16) of the first hub plate (6).

## Description

The invention relates to a brake assembly, in particular to a joint which connects a brake plate with hub plates.

Such brake assembly plays a significant role in a braking system in a vehicle. It reduces kinetic energy of a drive shaft through friction generated between the brake plate and the brake pads, thereby decelerating the vehicle. The brake pads are actuated by hydraulic cylinders to press the brake pad against the brake plate. During braking process, the brake plate encounters high vibrational stresses. Because of the high intensity vibrations, there is a chance of the brake plate getting damaged. The hub plates are provided on both sides of the brake plate to strengthen the brake plate and accordingly avoid damage of the brake plate.

The brake assemblies available in the market include a rivet joint to join the brake plate with the hub plates. The rivet joint consist of numerous components within the brake assembly. The presence of numerous components within the brake assembly complicates its design and assembly process. The numerous components and the vibrations caused by the braking process can result in noise and vibration issues linked to rivet joints.

Hence, an object of the invention is to join the brake plate with the hub plates reducing the number of components in the assembly which makes the assembly more robust.

This object is achieved by a brake assembly with the features of claim 1.

A brake assembly comprises a brake plate mountable on a shaft with the support of a first hub plate and a second hub plate.

The brake plate is placed between the first hub plate and the second hub plate. The brake plate is configured with a plurality of holes. At least the first hub plate has a plurality of extrusions having a spread at the end of each of the extrusions and at least the second hub plate has a plurality of holes. The first hub plate, the second hub plate and the brake plate are connected by a joint. The joint is defined by extending at least one of the extrusions of the first hub plate through at least one of the holes of the brake plate, and at least one of the holes of the second hub plate receives the spread of the first hub plate.

The joints of the brake assembly according to the invention are formed by interlocking the first hub plate and the second hub plate. The extrusion of the first hub plate is extended through at least one of the holes of the brake plate. The spread of the first hub plate is received by the hole of the second hub plate. This interlocking arrangement eliminates the need for any additional assembly components such as those required in case of a rivet joint. The number of components required for the brake assembly are drastically reduced. The interlocking arrangement of the joint according to the invention further makes the assembly more robust providing the structural strength to the brake assembly. It also reduces the vibrations and noise induced in the brake assembly.

The brake plate comprises a plurality of holes equidistantly located in a circular pattern. However, the person skilled in the art will appreciate that the holes on the brake plate can be in any other pattern. The holes on the brake plate can be in square pattern, rectangular pattern, triangular pattern, zig-zag pattern, etc. It may also be possible that the holes are not placed equidistantly. For example, it can be in set of two. Two holes are placed side by side, followed by a gap, and then another pair of holes is positioned together. The holes are circular in shape. However, it can be of any other shape such as a rectangular shape, a square shape, a polygonal shape, an arc, etc. The holes of the brake plate are located near the outer circumference of the hub plates. Joints are formed at these holes by extending the extrusion of the first hub plate though the holes of the brake plate.

The first hub plate has a plurality of extrusions having the spread at the end of the extrusion. The extrusion and the spread are an integral part of the first hub plate. The first hub plate, the extrusion and the spread are formed as single piece of material. The extrusion is extended through the hole of the brake plate towards the second hub plate. The shape of the extrusion is the same as the shape of the hole in the brake plate. Since, the hole of the brake plate is circular, the extrusion is also circular. The extrusion is tightly extended through the hole of the brake plate. This tight fitting provides strength to the assembly against the vibration induced during the braking process. The spread of the first hub plate is located on the opposite side of the brake plate and is coplanar with the second hub plate making the assembly compact and robust.

The second hub plate has a plurality of holes to receive the spread of the first hub plate. The hole of the second hub plate is equal to the spread of the first hub plate. This ensures a form fit connection between the spread and the hole of the second hub plate further helping to improve the strength of the assembly. The spread and the holes of the second hub plate are circular in shape. However, it can be of any other shape such as a rectangular shape, a square shape, a polygonal shape, an arc, etc.

The hole on the brake plate is smaller than the spread of the first hub plate to ensure locking of the assembly. This arrangement makes a firm connection between the first hub plate and the brake plate and restricts the first hub plate to detach from the brake plate.

The joint is formed by a forming process. Material of the first hub plate is pressed through the hole of the brake plate making the extrusion on the first hub plate. A die on the other side of the brake plate allows the material of the first hub plate to spread on the opposite side of the brake plate. It may also be possible that the first hub plate along with the extrusion and the spread is manufactured prior to the assembly. The brake plate material is made elastic. The brake plate is then fitted over the extrusion by stretching the hole of the brake plate and passing through the spread of the first hub plate. Any other manufacturing or assembly method which allows the spread of the first hub plate to be bigger than the hole of the brake plate and to be on the other side of the brake plate can be used.

The first hub plate and the second hub plate are identical. Each hub plate has the extrusions and the holes placed alternately. The extrusion of the hub plate is followed by the hole and vice versa. The first hub plate and the second hub plate are placed in different orientations. The different orientation allows the holes of the second hub plate to receive the spread of the first hub plate and vice versa.

The adjacent holes of the brake plate are configured to receive extrusion of either of the hub plates. The hole of the brake plate can receive the extrusion of the first hub plate or the second hub plate. In any adjacent holes of the brake plate, the first hole is configured to receive extrusion of the first hub plate whereas the other hole of the same adjacent holes of the brake plate is configured to receive the extrusion of the second hub plate. This alternate arrangement of the joints improves the strength and stability of the brake assembly.

A person skilled in the art will appreciate the other variation of the assembly. For example, the hub plate may not be identical. In one of the embodiments, all the extrusions having the spreads are on the one hub plate and all the holes are on other hub plate to receive all the spread of the first hub plate. In another embodiment of the invention, the extrusion having the spread can be in sets. For example, the first hub plate has two consecutive extrusions followed by two consecutive holes and this arrangement repeated in circular pattern. Various variations of the assembly are possible. The important aspect of the invention is the joining of the first hub plate with the second hub plate without adding any external connecting member.

The brake plate is configured with a friction material near the outer edge of the brake plate. The brake assembly including the hub plates and the brake plate rotates along with the shaft. When it is required to apply the brake, the brake pads are pressed over the friction material of brake plate using the hydraulic actuation mechanism. It causes friction between the brake pad and the brake plate, retarding the speed of the shaft, hence retarding the speed of the vehicle.

The brake assembly according to the invention is mountable in any vehicle including agricultural vehicles such as tractor, combine harvester, etc.

A brake assembly according to the invention is explained in greater detail below on the basis of the enclosed drawings, wherein matching reference numbers designate components which are structurally identical or comparable in terms of their function. In the drawings:
- Fig. 1: shows perspective view of a brake assembly,
- Fig. 2: shows exploded view of a brake assembly,
- Fig. 3: shows a joint of a first hub plate, a second hub plate and a brake plate according to the invention,
- Fig. 4: shows placement of the joints,
- Fig. 5: shows embodiment of the invention with set of holes together, and
- Fig. 6: shows another embodiment of the invention with two consecutive extrusions followed by two consecutive holes.

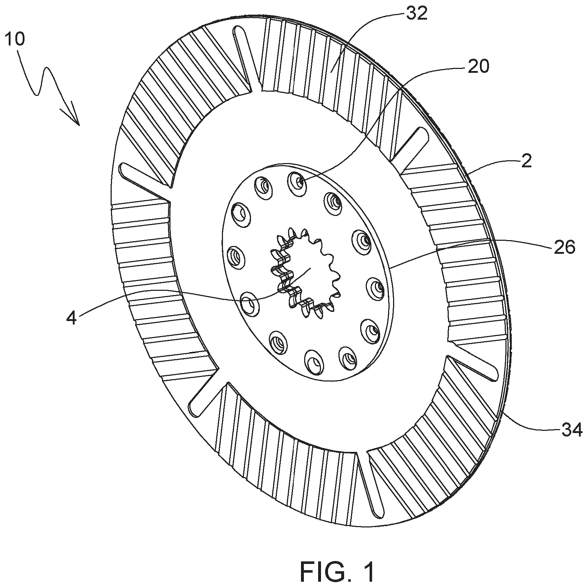

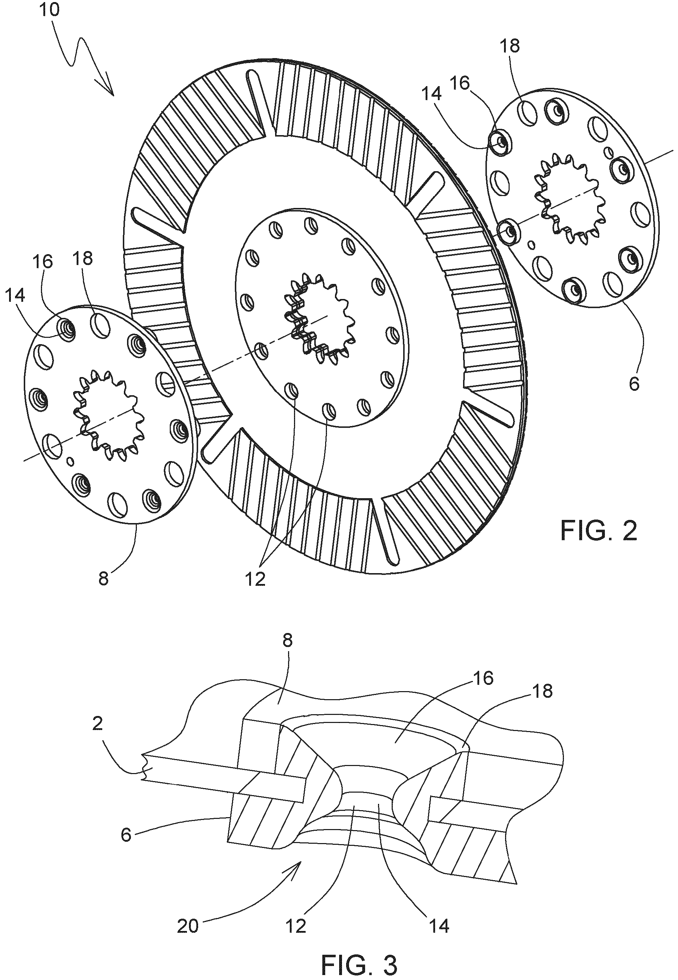

Fig. 1 and Fig. 2 show a brake assembly 10 according to the invention. The brake assembly 10 is mountable in an agricultural machine such as tractor. The brake assembly 10 comprises a brake plate 2. The brake plate 2 is mountable on a shaft (not shown) with the help of a centre hole 4 of the brake plate 2. For supporting the mounting of the brake plate 2, a first hub plate 6 and a second hub plate 8 are used. The hub plates 6 and 8 enhanced the strength of the brake plate 2. The brake plate 2 is mounted between the two hub plates 6 and 8. The brake plate 2 is configured with a friction material 32 near the outer edge 34 of the brake plate 2.

The brake plate 2 is configured with equidistantly located plurality of holes 12. The holes 12 are arranged in a circular pattern. However, the person skilled in the art will appreciate that the holes 12 on the brake plate 2 can be in any other pattern. The holes on the brake plate can be in square pattern, rectangular pattern, triangular pattern, zig-zag pattern, etc. The holes 12 are circular, however, it can be of any shape such as a rectangular shape, a square shape, a polygonal shape, an arc.

Conventionally, the brake plate 2, the first hub plate 6 and the second hub plate 8 are connected by a rivet joint. The rivet joint presents several challenges during operation, and its lifespan is generally shorter.

To solve the above problem, the brake assembly 10 is disclosed in this invention. The brake plate 2, first hub plate 6 and the second hub plate 8 are joint together by a joint 20 as shown in Fig. 1 and Fig. 2. As shown in Fig. 2 and Fig. 3, the first hub plate 6 comprises a plurality of extrusions 14 having a spread 16 at the end of each extrusion. The extrusion 14 and the spread 16 are an integral part of the first hub plate 6. The extrusion 14, the spread 16 and the first plate 6 are formed as a single piece of material. The second hub plate 8 is configured with plurality of holes 18 to receive the spread 16 of the first hub plate 6.

As shown in Fig. 3, the brake plate 2, the first hub plate 6 and the second hub plate 8 are connected together at joint 20. The extrusion 14 of the first hub plate 6 is extended through the hole 12 of the brake plate 2. The shape of the extrusion 14 of the first hub plate 6 matches with the shape of the hole 12 of the brake plate 2. The hole 12 and the extrusion 14 are circular. However, it can be of any other shape such as a rectangular shape, a square shape, a polygonal shape, an arc, etc. The spread 16 of the first hub plate 6 is on the opposite side of the brake plate 2. The spread 16 of the first hub plate 6 is coplanar with the second hub plate 8. The hole 18 of the second hub plate 8 receives the spread 16 of the first hub plate 6. The spread 16 and the hole 18 of the second hub plate 8 is circular in shape.

The hole 12 of the brake plate 2 is smaller than the spread 16 of the first hub plate 6. This arrangement locks the first hub plate 6 with the brake plate 2 and the second hub plate 8. The spread 16 of the first hub plate 6 is equal to the hole 18 of the second hub plate 8 to ensure the form fit.

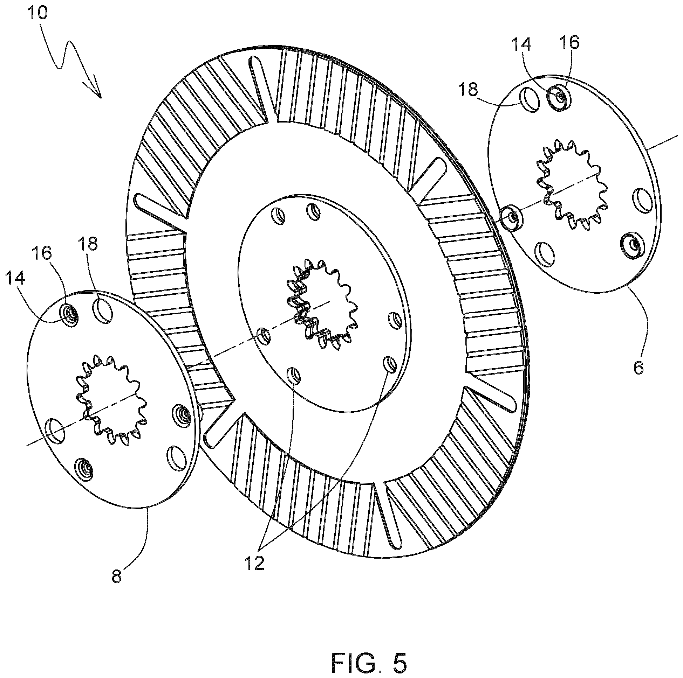

As shown in Fig. 1, the joints 20 are equidistantly located in circular manner near an outer edge 26 of the hub plate 6, 8. The person skilled in the art will appreciate the different variation of placement of joint 20. According to another embodiment of the invention, as shown in fig. 5, the joints 20 are placed in the set of two. A pair of holes 12 of the brake plate 2 is placed together followed by a gap, further followed by a pair of holes 12. The joints 20 may be placed in other pattern such as square, triangle or zigzag.

As shown in Fig. 2, the first hub plate 6 and the second hub plate 8 are identical. Each hub plate 6 and 8 has the extrusions 14 and holes 18 placed alternately. The extrusion 14 of the hub plate 6, 8 is followed by the hole 18 and vice versa. The first hub plate 6 and the second hub plate 8 are placed in different orientations. The different orientation allows the holes 18 of the second hub plate 8 to receive the extrusion 14 of the first hub plate 6 and vice versa.

As shown in Fig. 2, the adjacent holes 12 of the brake plate 2 are configured to receive extrusion 14 of either of the hub plates 6, 8. For better strength of the assembly the joins 20 are formed by alternately extending the extrusions 14 of the first hub plate 6 and the second hub plate 8 through the holes 12 of the brake plate 2. A first hole 12 in any adjacent holes 12 of the brake plate 2 is configured to receive extrusion 14 of the first hub plate 6 whereas the other hole 12 of the same adjacent hole 12 of the brake plate 2 is configured to receive the extrusion 14 of the second hub plate 8.

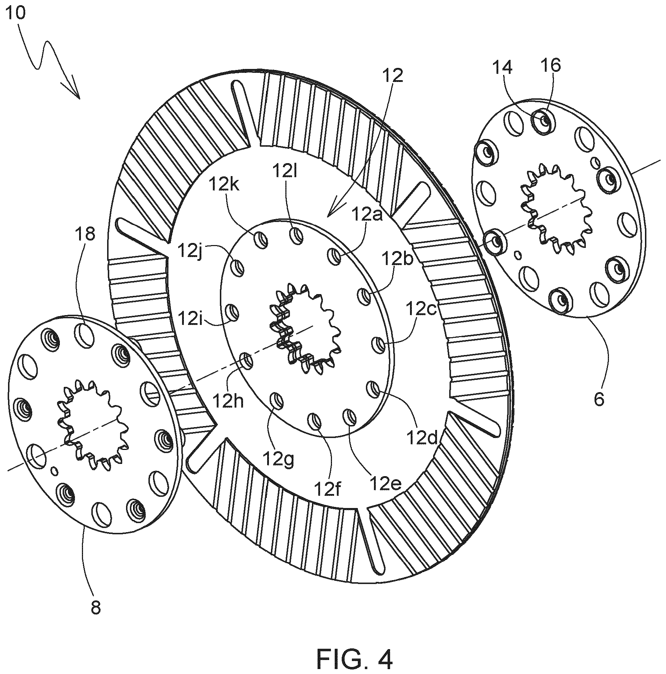

The first hole 12a of the adjacent holes 12a and 12b, as shown in Fig. 4, receives the extrusion 14 of the first hub plate 6. Whereas the second hole 12b of the same adjacent holes 12a and 12b receives the extrusion 14 of the second hub plate 8. This alternate arrangement of locking makes the assembly robust. The adjacent holes 12 are any consecutive hole 12. It can be any set of holes, for example, 12a and 12b or 12a and 121.

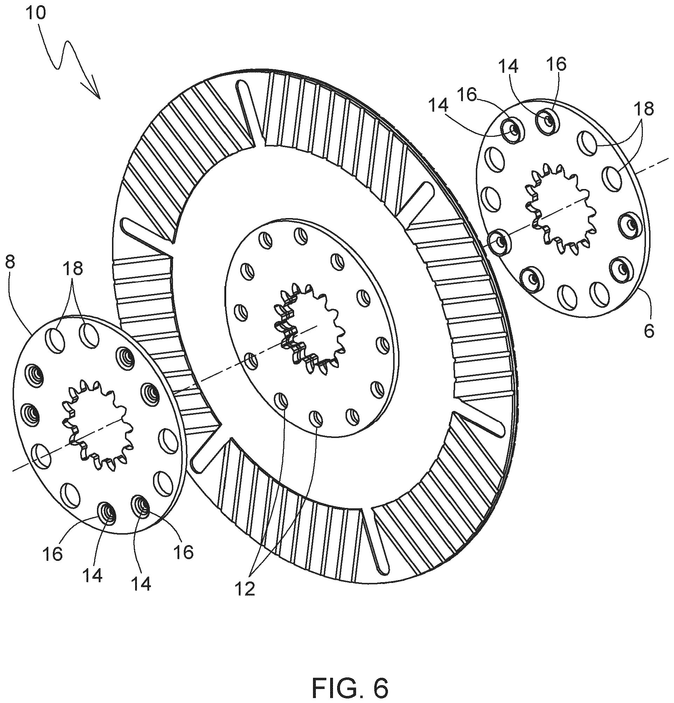

Fig. 6 shows another embodiment of the invention. The extrusion 14 and the holes 18 are alternately arranged in set of two. Two extrusion 14 are followed by two holes 18 which is further followed by two extrusion 14, and so on. The extrusion 14 and the hole 18 on other hub plate 6, 8 compliment the first hub plate 6, 8.

The interlocking arrangement of the joint 20 without adding additional components makes the brake assembly 10 robust.

## Claims

1. Brake assembly, comprising a brake plate (2) mountable on a shaft with the support of a first hub plate (6) and a second hub plate (8), wherein the brake plate (2) is placed between the first hub plate (6) and the second hub plate (8), wherein the brake plate (2) is configured with a plurality of holes (12), wherein at least the first hub plate (6) has plurality of extrusions (14) having a spread (16) at the end of each of the extrusions (14) and at least the second hub plate (8) has a plurality of holes (18), wherein the first hub plate (6), the second hub plate (8) and the brake plate (2) are connected by a joint (20), wherein the joint (20) is defined by extending at least one of the extrusions (14) of the first hub plate (6) through at least one of the holes (12) of the brake plate (2), and at least one of the holes (18) of the second hub plate (8) receives the spread (16) of the first hub plate (6).

2. The brake assembly according to claim 1, **characterized in that** the extrusions (14) and the spreads (16) are integral part of the first hub plate (6).

3. The brake assembly according to claim 1 oder 2, **characterized in that** the spread (16) of the first hub plate (6) is located on the opposite side of the brake plate (2) and is coplanar with the second hub plate (8).

4. The brake assembly according to at least one of claims 1 to 3, **characterized in that** the hole (12) on the brake plate (2) is smaller than the spread (16) of the first hub plate (6) to ensure locking of the assembly.

5. The brake assembly according to at least one of claims 1 to 4, **characterized in that** the hole (18) on the second hub plate (8) receives the spread (16) of the first hub plate (6) to establish a form fit.

6. The brake assembly according to at least one of claims 1 to 5, **characterized in that** the joints (20) are equidistantly located in circular manner near an outer edge (26) of the hub plate (6, 8).

7. The brake assembly according to at least one of claims 1 to 6, **characterized in that** the first hub plate (6) and the second hub plate (8) are identical.

8. The brake assembly according to at least one of claims 1 to 7, **characterized in that** the adjacent holes (12) of the brake plate (2) are configured to receive extrusion (14) of either of the hub plates (6, 8).

9. The brake assembly according to claim 8, **characterized in that** a first hole (12) in any adjacent holes (12) of the brake plate (2) is configured to receive extrusion (14) of the first hub plate (6) whereas the other hole (12) of the same adjacent hole (12) of the brake plate (2) is configured to receive the extrusion (14) of the second hub plate (8) .

10. The brake assembly (10) according to at least one of claims 1 to 9, **characterized in that** the brake plate (2) is configured with a friction material (32) near the outer edge (34) of the brake plate (2).

11. The brake assembly according to at least one of claims 1 to 10, **characterized in that** the extrusion (14), the spread (16), the holes (18) on the second hub plate (8) and the holes (12) on the brake plate (2) has a shape selected from the group consisting of a circular shape, a rectangular shape, a square shape, a polygonal shape or an arc.

12. The brake assembly according to at least one of claims 1 to 11, **characterized in that** the brake assembly (10) is mountable in an agricultural machine.
